**Europäisches Patentamt**

(19) **European Patent Office**

**Office européen des brevets**

(11) Veröffentlichungsnummer: **0 205 415**
**B1**

(12) # EUROPÄISCHE PATENTSCHRIFT

(45) Veröffentlichungstag der Patentschrift:
14.12.88

(51) Int. Cl.⁴: **F 02 B 27/06**, F 02 D 13/02

(21) Anmeldenummer: **86890096.0**

(22) Anmeldetag: **07.04.86**

(54) Zweitakt-Brennkraftmaschine mit einer Resonatorkammer in der Auspuffanlage.

(30) Priorität: **15.04.85 AT 1110/85**

(43) Veröffentlichungstag der Anmeldung:
**17.12.86 Patentblatt 86/51**

(45) Bekanntmachung des Hinweises auf die Patenterteilung:
**14.12.88 Patentblatt 88/50**

(84) Benannte Vertragsstaaten:
**DE IT SE**

(56) Entgegenhaltungen:
**AT-B-369 866**
**FR-A-2 525 277**
**US-A-2 072 372**
**US-A-4 364 346**

**PATENTS ABSTRACTS OF JAPAN, Band 8, Nr. 240**
**(M-336) 1677 , 6. November 1984; & JP-A-59 119 016**
**(HONDA GIKEN KOGYO K.K.) 10-07-1984**

(73) Patentinhaber: **Bombardier- Rotax Gesellschaft m.b.H., Welser Strasse 32, A-4623 Gunskirchen (AT)**

(72) Erfinder: **Korenjak, Norbert, Ing., Kapellenweg 13, A-4651 Stadl- Paura (AT)**

(74) Vertreter: **Hübscher, Helmut, Dipl.- Ing., Patentanwälte Dipl.- Ing. Gerhard Hübscher Dipl.- Ing. Helmut Hübscher Dipl.- Ing. Heiner Hübscher Spittelwiese 7, A-4020 Linz (AT)**

EP 0 205 415 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Zweitakt-Brennkraftmaschine mit einer Auspuffanlage für wenigstens einen Zylinder, die zumindest eine über eine Verbindungsleitung an einen Auslaßkanal des Zylinders angeschlossene Resonatorkammer und einen mittels eines Stelltriebes betätigbaren Verschluß für die Verbindungsleitung aufweist.

Die Abgasschwingungen in der Auspuffanlage einer Zweitakt-Brennkraftmaschine können zur besseren Aufladung ausgenützt werden, wenn diese Abgasschwingungen auf einen bestimmten Betriebszustand und eine bestimmte Drehzahl abgestimmt sind. Mit Hilfe der dann auftretenden Resonanzschwingungen kann nicht nur eine bessere Spülung, sondern auch eine zusätzliche Aufladung erreicht werden. Da naturgemäß die besten Ladungsverhältnisse im Bereich der größten Motorleistung sichergestellt werden sollen, ist die Auspuffanlage in ihrem Schwingungsverhalten an diesen Leistungsbereich anzupassen. Eine solche Resonanzabstimmung bedingt aber im Drehzahlbereich unterhalb der Drehzahl für das größte Drehmoment ein für das Aufladen des Motors ungünstigeres Schwingungsverhalten der Auspuffanlage, was einen entsprechenden Drehmomenteinbruch zur Folge hat. Zur Vermeidung von solchen Drehmomenteinbrüchen muß folglich das Schwingungsverhalten der Auspuffanlage im unteren Drehzahlbereich des Motors verändert werden, indem eine über eine Verbindungsleitung an den Auslaßkanal des Zylinders angeschlossene Resonatorkammer geöffnet wird. Zu diesem Zweck ist es bekannt (FR-A-2 547 866), einen Verschluß für die Verbindungsleitung vorzusehen, der mit Hilfe eines Stelltriebes in Abhängigkeit von der Motordrehzahl betätigt wird, und zwar über einen Fliehkraftregler. Nachteilig bei dieser bekannten Konstruktion ist vor allem, daß durch den Fliehkraftregler eine vergleichsweise träge Steuerung bei einem hohen Bauaufwand in Kauf genommen werden muß. Außerdem läßt die ausschließlich von der Drehzahl abhängige Steuerung des Verschlusses der Verbindungsleitung zwischen dem Auslaßkanal des Zylinders und der Resonatorkammer den Einfluß unterschiedlicher Motorbelastungen auf das Schwingungsverhalten der Auspuffanlage bei gleicher Motordrehzahl unberücksichtigt.

Um den Abgasfluß durch den Schalldämpfer einer Auspuffanlage zur Optimierung der Schalldämpfung bei verschiedenen Belastungszuständen des Motors steuern zu können, ist es bekannt (EP-A-0 077 230), die Austrittsöffnung einer vom Abgas durchströmten Resonatorkammer des Schalldämpfers mit einem Verschluß zu versehen, der in Abhängigkeit von der Durchflußmenge des Abgases gesteuert wird. Die Durchflußmenge des Abgases wird dabei beispielsweise über den Differenzdruck zwischen der Resonatorkammer und einer vor-oder einer nachgeordneten Kammer bestimmt, was eine entsprechende Drosselung der Abgasströmung erfordert. Aus diesem Grunde ist die bekannte Vorrichtung zur Steuerung des Resonanzverhaltens einer Auspuffanlage zum Zweck eines besseren Ladungswechsels ungeeignet, weil sich eine Drosselung der Abgasströmung leistungsmindernd auf den Spülvorgang und auf die Aufladung auswirkt. Außerdem soll mit Hilfe der Durchflußregelung ein bestimmtes Resonanzverhalten des Schwingungsdämpfers bewahrt und nicht in Abhängigkeit von der Motorbelastung verändert werden, was einer Anpassung des Schwingungsverhaltens der Auspuffanlage für eine Unterstützung des Ladungswechsels entgegensteht. Dazu kommt noch, daß die Resonatorkammer und der Verschluß von den heißen Abgasen durchströmt und einer entsprechenden Temperaturbelastung ausgesetzt werden, die mechanische Probleme schafft.

Der Erfindung liegt somit die Aufgabe zugrunde, eine Zweitakt-Brennkraftmaschine der eingangs geschilderten Art so zu verbessern, daß mit einfachen Mitteln eine wirksame Steuerung des Stelltriebes für den Verschluß der Verbindungsleitung zwischen der Resonatorkammer und dem Auslaßkanal des Zylinders sichergestellt werden kann.

Die Erfindung löst die gestellte Aufgabe dadurch, daß der Stelltrieb für den Verschluß der Verbindungsleitung in Abhängigkeit vom Abgasdruck im Auslaßkanal steuerbar ist.

Da sich der Abgasdruck im Auslaßkanal des Zylinders einerseits mit der Motordrehzahl und anderseits mit dem Drehmoment ändert, wird durch den Abgasdruck eine Führungsgröße für den Stelltrieb erhalten, die die Abhängigkeit des Schwingungsverhaltens der Auspuffanlage von der Motordrehzahl und dem Betriebszustand des Motors voll berücksichtigt. Dabei erlaubt die Abhängigkeit des Abgasdruckes von der Motorbelastung einen unmittelbaren Steuereingriff bei Belastungsänderungen, so daß die mit der reinen Drehzahlsteuerung des Verschlusses der Resonatorkammer verbundene Trägheit vermieden wird. In baulicher Hinsicht ergibt sich darüber hinaus der Vorteil, daß für die Berücksichtigung der Motordrehzahl keine drehenden Konstruktionsteile vorgegeben werden müssen, weil der Abgasdruck in einfacher Weise beispielsweise über eine Membranbewegung erfaßt und auf einen Stellkörper übertragen werden kann. Die Abhängigkeit der Verschlußsteuerung von dem Abgasdruck im Auslaßkanal des Zylinders macht außerdem Drosselstellen im Bereich des Strömungsweges der Abgase innerhalb des Auslaßkanales überflüssig. Als Auslaßkanal ist dabei nicht nur das Kanalstück im unmittelbaren Zylinderbereich, sondern auch das an den Zylinder anschließende Rohrstück zu verstehen, weil es ja lediglich darum geht, den ungedrosselten Abgasdruck zu bestimmen. Die Ausnützung der Resonanzschwingungen der Auspuffanlage für eine gute Füllung und möglichst geringe Ladungsverluste bedingt ein entsprechend frühes Öffnen des Auslaßschlitzes. Eine solche Abstimmung der Auspuffanlage auf die Spitzenleistung hat aber im unteren und mittleren Drehzahlbereich ein starkes Ansteigen der Ladungsverluste und damit ein Absinken des Drehmomentes zur Folge. Um diese Nachteile zu vermeiden, ist es bekannt (AT-PS 369 866), die wirksame Höhe des Auslaßschlitzes mittels eines Steuerkörpers zu verändern, der über einen Stelltrieb in Abhängigkeit vom Abgasdruck in der Auspuffanlage gesteuert wird, so daß die Verstellung des Steuerkörpers unter Berücksichtigung der jeweiligen Motordrehzahl und der Motorbelastung erfolgt. Ist eine Zweitakt-Brennkraftmaschine mit einem in Abhängigkeit vom Abgasdruck verstellbaren Steuerkörper für den Auslaßschlitz versehen, so ergeben sich im Zusammenhang mit der erfindungsgemäßen Betätigung des Verschlusses für die Verbindungsleitung zur Resonatorkammer besonders vorteilhafte Verhältnisse, wenn ein gemeinsamer Stelltrieb für den in Abhängigkeit vom Abgasdruck zu betätigenden Verschluß der Verbindungsleitung zur Resonatorkammer und für den Steuerkörper des Auslaßschlitzes vorgesehen ist. Von dem gemeinsamen Stelltrieb können die notwendigen Stellbewegungen für die Veränderung der wirksamen Höhe des Auslaßschlitzes und für den Verschluß der Resonatorkammer abgeleitet werden. Beide Stellbewegungen sollen ja in unmittelbarem Zusammenhang mit entsprechenden Änderungen des Abgasdruckes im Auslaßkanal des Zylinders vorgenommen werden.

In der Zeichnung ist der Erfindungsgegenstand beispielsweise dargestellt. Es zeigen

Fig. 1   eine erfindungsgemäße Zweitakt-Brennkraftmaschine in einem vereinfachten Schnitt,

Fig. 2   einen Schnitt nach der Linie II-II der Fig. 1 in einem größeren Maßstab,

Fig. 3   eine der Fig. 1 entsprechende Darstellung einer Konstruktionsvariante und

Fig. 4   einen Schnitt nach der Linie IV-IV der Fig. 3 in einem größeren Maßstab.

Die dargestellte Zweitakt-Brennkraftmaschine besteht in üblicher Weise aus einem Zylinder 1 und einem Arbeitskolben 2, der einen Einlaßschlitz 3, Spülschlitze 4 und einen Auslaßschlitz 5 steuert. An den Auslaßkanal 6 ist dabei eine Resonatorkammer 7 angeschlossen, deren Verbindungsleitung 8 mit dem Auslaßkanal 6 der Auspuffanlage durch einen Verschluß 9 geöffnet und verschlossen werden kann. Dieser Verschluß 9 besteht gemäß den Ausführungsbeispielen aus einer Drehklappe 10, die über eine Welle 11 von einem Stelltrieb 12 verdreht werden kann. Dieser Stelltrieb 12 besteht aus einer Membran 13, die über eine Beaufschlagungsleitung 14 mit dem Druck der Abgase im Auslaßkanal 6 beaufschlagt werden kann und mit einer durch eine Rückstellfeder 15 belasteten Stellstange 16 verbunden ist. Diese Stellstange 16 ist mit einer Zahnstange 17 verbunden, die mit einem Ritzel 18 auf der Welle 11 kämmt, so daß bei einer Beaufschlagung der Membran 13 die Stellstange 16 und damit die Zahnstange 17 gegen die Kraft der Rückstellfeder 15 verstellt und die Welle 11 mit der Drehklappe 10 verdreht wird. Mit zunehmendem Abgasdruck, also zunehmender Motordrehzahl und größer werdendem Drehmoment wird somit die Verbindungsleitung 8 zwischen der Resonatorkammer 7 und dem Auslaßkanal 6 verschlossen, womit die Auspuffanlage in ihrem Schwingungsverhalten an die Spitzenleistung des Motors angepaßt wird. Mit abnehmender Drehzahl und sinkender Motorbelastung nimmt der Abgasdruck in der Auspuffanlage ab, was ein Rückstellen der Stellstange über die Feder 15 und damit ein Öffnen des Verschlusses 9 der Resonatorkammer 7 zur Folge hat. Bedingt durch den Anschluß der Resonatorkammer 7 an den Auslaßkanal 6 wird das Schwingungsverhalten der Auspuffanlage an geringere Drehzahlen und geringere Motorbelastungen angepaßt, so daß nicht nur im Bereich der Spitzenleistung, sondern auch im Teillastbereich bei niedrigeren Drehzahlen vorteilhafte Ladungsverhältnisse sichergestellt werden können.

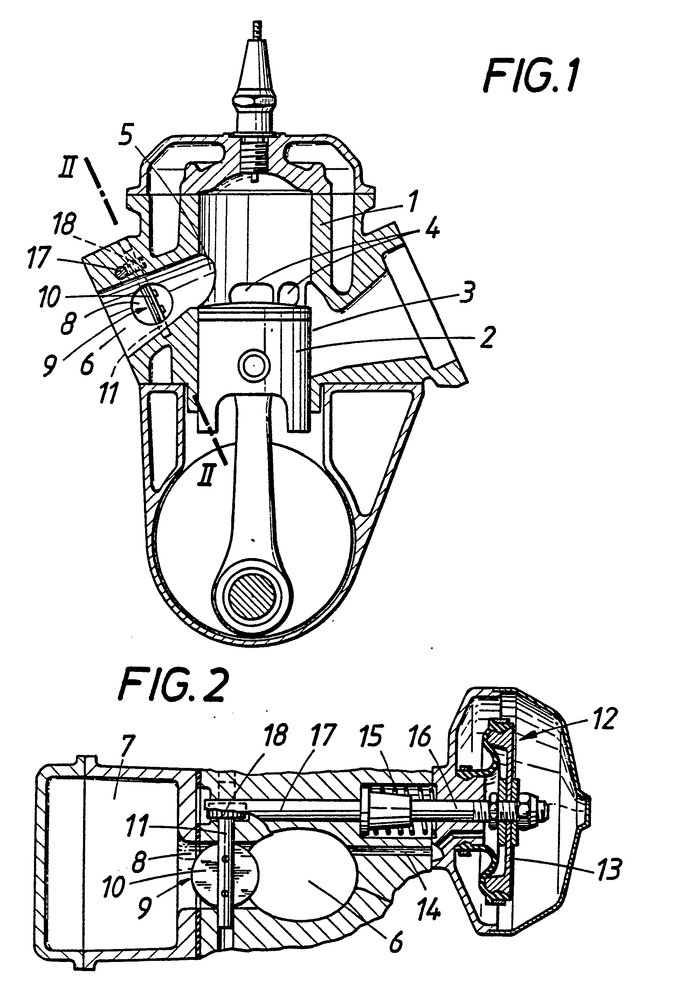

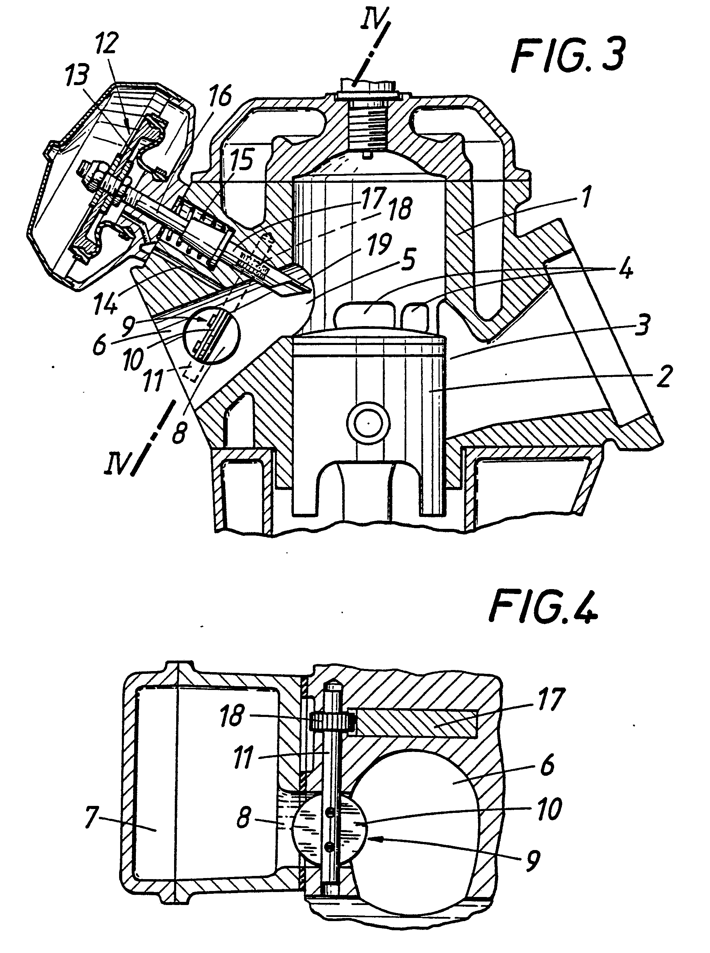

Zum Unterschied zum Ausführungsbeispiel nach den Fig. 1 und 2 ist die Zweitakt-Brennkraftmaschine nach den Fig. 3 und 4 mit einem Steuerkörper 19 für die wirksame Höhe des Auslaßschlitzes 5 versehen. Dieser Steuerkörper 19 wird ebenfalls in Abhängigkeit vom Abgasdruck in der Auspuffanlage verstellt, um größere Ladungsverluste bei geringeren Drehmomenten zu vermeiden. Da dieser Steuerkörper 19 von der Zahnstange 17 des Stelltriebes 12 getragen wird, ist für die Steuerung des Steuerkörpers 19 kein gesonderter Stelltrieb erforderlich. Es ergeben sich folglich sehr einfache Konstruktionsbedingungen. Der unterschiedliche Stellweg für den Steuerkörper 19 und die Drehklappe 10 wird durch eine entsprechende Übersetzung zwischen der Zahnstange 17 und dem Ritzel 18 sichergestellt.

**Patentansprüche**

1. Zweitakt-Brennkraftmaschine mit einer Auspuffanlage für wenigstens einen Zylinder (1), die zumindest eine über eine Verbindungsleitung (8) an einen Auslaßkanal (6) des Zylinders (1) angeschlossene Resonatorkammer (7) zur Aufladung der Brennkraftmaschine und einen mittels eines Stelltriebes (12) betätigbaren Verschluß (9) für die Verbindungsleitung (8) aufweist, dadurch gekennzeichnet, daß der Stelltrieb (12) für den Verschluß (9) der Verbindungsleitung (8) in Abhängigkeit vom Abgasdruck im Auslaßkanal (6) steuerbar ist.

2. Zweitakt-Brennkraftmaschine nach Anspruch 1, mit einem Zylinder, dessen vom Arbeitskolben gesteuerter Auslaßschlitz in seiner wirksamen Höhe mittels eines in Abhängigkeit vom Abgasdruck im Auslaßkanal verstellbaren Steuerkörpers veränderbar ist, dadurch gekennzeichnet, daß ein gemeinsamer Stelltrieb (12) für den in Abhängigkeit vom Abgasdruck zu betätigenden Verschluß (9) der Verbindungsleitung (8) und für den Steuerkörper (19) des Auslaßschlitzes (5) vorgesehen ist.

## Claims

1. A two-stroke-cycle internal combustion engine comprising an exhaust plant which is associated with at least one cylinder (1) and comprises at least one resonator chamber (7), which serves to supercharge the internal combustion engine and is connected by a communicating line (8) to an exhaust port (6) of the cylinder (1), and a shutter (9) for the communicating line (8), which shutter is operable by an actuator (12), characterized in that the actuator (12) for the shutter (9) of the communicating line (8) is adapted to be controlled in dependence on the exhaust gas pressure in the exhaust gas port (6).

2. A two-stroke-cycle internal combustion engine according to claim 1, comprising a cylinder which has an exhaust port that is controlled by the working piston and has an effective height which is variable by a valve member which is adjustable in dependence on the exhaust gas pressure in the exhaust port, characterized in that a common actuator (12) is provided for the shutter (9) for the communicating line (8), which shutter is operable in dependence on the exhaust gas pressure, and for the valve member (19) associated with the exhaust port (5).

## Revendications

1. Moteur à combustion interne à deux temps muni d'une installation d'échappement pour un cylindre (1) au moins, qui présente une chambre (7) formant résonateur, destinée à la suralimentation du moteur à combustion interne et raccordée à un canal de liaison (8), et un organe obturateur (9) servant à obturer la conduite de liaison (8) et qui peut être actionné au moyen d'un organe (12) d'actionnement, caractérisé par le fait que l'organe d'actionnement (12), servant à actionner l'organe obturateur (9) de la conduite de liaison (8), est commandé en fonction de la pression des gaz d'échappement qui règne dans le canal (6) d'échappement.

2. Moteur à combustion interne à deux temps selon la revendication 1, comprenant un cylindre dont la lumière d'échappement, commandée par le piston de travail, peut être modifiée en hauteur effective au moyen d'un corps de commande qui peut être déplacé en fonction de la pression des gaz d'échappement régnant dans le canal d'echappement, caractérisé par le fait qu'il est prévu un organe commun (12) d'actionnement pour l'organe obturateur (9) de la conduite de liaison (8), qui doit être actionné en fonction de la pression des gaz d'échappement, et pour le corps de commande (19) de la lumière d'échappement.

*FIG.1*

*FIG. 2*

FIG.3

FIG.4